# EUROPÄISCHE PATENTSCHRIFT

(11) **EP 1 971 819 B1**
(45) Veröffentlichungstag und Bekanntmachung des Hinweises auf die Patenterteilung: **30.09.2009**
(21) Anmeldenummer: 07702553.4
(22) Anmeldetag: 02.01.2007
(51) Int. Cl.: G01B 13/12

(54) **ABSTANDS-MESSEINRICHTUNG**
DISTANCE MEASURING DEVICE
DISPOSITIF DE MESURE D'ÉCART

(30) Priorität: 13.01.2006 DE 102006001740
(43) Veröffentlichungstag der Anmeldung: 24.09.2008
(73) Patentinhaber: FESTO AG & Co. KG, 73734 Esslingen (DE)
(72) Erfinder: HIRT, Peter, CH-3073 Gümligen (CH); KOLLER, Gérald, CH-8600 Dübendorf (CH)
(74) Vertreter: Vetter, Hans
(86) Internationale Anmeldenummer: PCT/EP2007/000002
(87) Internationale Veröffentlichungsnummer: WO 2007/082636

(56) Entgegenhaltungen:
- DE-A1- 2 921 989
- SU-A1- 945 654

## Beschreibung

Die Erfindung betrifft eine Messeinrichtung zur Erfassung des Abstands zwischen einer druckgespeisten Staudüse und einem Objekt mit Hilfe eines zwischen dieser und einem Versorgungsdruckanschluss angeordneten Ejektors, gemäß dem Oberbegriff des Anspruchs 1.

Eine derartige Anordnung mit einem Ejektor ist beispielsweise aus der DE 200 04 783 U bekannt, wobei dort der am Sauganschluss des Ejektors erfasste Druckwert direkt als Auswertesignal herangezogen wird. Nachteilig ist dabei die Lage der Ejektor-Kennlinie, die zwischen dem Speisedruck und dem maximalen Unterdruck liegt.

In der SU-A-945 654 wird der Druck am Sauganschluss des Ejektors und an einer hinter dem Ejektor angeordneten Kammer abgegriffen und einem Differenzdrucksensor zur Gewinnung des Abstandssignals zugeführt.

Weiterhin ist aus der DE-A-2921989 eine ähnliche Abstands-Messeinrichtung bekannt, wobei dort der Quotient zwischen dem Druckwert am Sauganschluss des Ejektors und dem Versorgungsdruckwert zur Bestimmung des Abstands herangezogen wird. Dadurch erhält man zwar einen vom Versorgungsdruck weitgehend unabhängigen Messkurvenverlauf, jedoch bestehen dieselben Nachteile hinsichtlich Signalhub und Auflösung.

Eine weitere bekannte Abstands-Messeinrichtung beruht auf dem Prinzip der Druckwaage. Nachteilig sind dabei ebenfalls ein relativ geringer Signalhub und eine schlechte Auflösung.

Eine Aufgabe der vorliegenden Erfindung besteht darin, die bekannten Abstands-Messeinrichtungen hinsichtlich Signalhub und Auflösung zu verbessern.

Diese Aufgabe wird erfindungsgemäß durch eine Abstands-Messeinrichtung mit den Merkmalen des Anspruchs 1 gelöst.

Im Unterschied zum Stand der Technik wird erfindungsgemäß das Differenzsignal zwischen den am Sauganschluss des Ejektors erfassten Druckwert und einem am Versorgungsdruckanschluss erfassten Wert zur Bestimmung des Abstands in einer Auswerteeinrichtung herangezogen. Dies führt zu einem größeren Signalhub und einer entsprechenden Messbereichserweiterung. Darüber hinaus wird eine verbesserte Auflösung erzielt. Zur Erfassung des Differenzsignals wird ein einziger Differenzdrucksensor verwendet, der mit der Auswerteeinrichtung verbunden ist. Dies stellt eine einfache und kostengünstige Lösung dar. Durch die in den abhängigen Ansprüchen aufgeführten Maßnahmen sind vorteilhafte Weiterbildungen und Verbesserungen der im Anspruch 1 angegebenen Messeinrichtung möglich.

In einfacher Weise kann eine Parallelverschiebung der Ejektorkennlinie und damit eine Anpassung an den Schaltpunkt des Sensors dadurch erreicht werden, dass eine einstellbare Druckveränderungseinrichtung für den Versorgungsdruck zur Vorgabe des vom Versorgungsdruck abhängigen Werts vorgesehen ist. Diese Druckabsenkungseinrichtung kann in vorteilhafter Weise als aus zwei Drosseln bestehende Reihenschaltung ausgebildet sein, die mit dem Versorgungsdruckanschluss verbunden ist, wobei wenigstens die in die Atmosphäre führende Drossel einstellbar ist und der vom Versorgungsdruck abhängige Wert zwischen den Drosseln abgreifbar ist. Im Unterschied zum Stand der Technik ergibt sich dadurch eine Kombination der bekannten Druckwaage, also einer aus Drosseln bestehenden Brückenanodnung, mit einem Ejektor, bei der ein Brückenzweig durch einen Ejektor als aktives Element ersetzt wird. Zur Bestimmung des Abstands wird das Differnzsignal zwischen dem am Sauganschluss des Ejektors erfassten Druckwert und einem vom Versorgungsdruck abhängigen Wert in einer Auswerteeinrichtung herangezogen. Dies führt zu einem noch größeren Signalhub und einer entsprechenden Messbereichserweiterung im Vergleich zur Druckwaage. Darüber hinaus wird, wie beim Ejektor, eine bessere Auflösung erzielt und zudem die Möglichkeit gegeben, die Kennlinie parallel zu verschieben.

Als besonders vorteilhaft hat es sich erwiesen, in der Auswerteeinrichtung Mittel zur Berechnung des Abstands als Funktion des durch den Wert des Versorgungsdrucks oder einen davon abhängigen Wert dividierten Differenzsignals vorzusehen. Zusätzlich zu den bereits erwähnten Vorteilen wird noch ein vom Versorgungsdruck im Wesentlichen unabhängiges Messsignal erreicht. Eine Konstantdruckquelle für den Versorgungsdruck ist dadurch nicht mehr erforderlich.

In einer bevorzugten Ausführungsvariante besitzt die Auswerteeinrichtung Umschaltmittel zum Umschalten zwischen wenigstens zwei Auswertearten, von denen die erste die Wiedergabe des Zahlenwerts des jeweils erfassten Abstands und die zweite die Wiedergabe des Über- und/oder Unterschreitens eines vorgebbaren Abstands-Sollwerts beinhaltet. Hierdurch können alle Funktionen in einer einheitlichen Ausführung integriert werden, wobei dann jeweils nach Kundenwunsch die vom jeweiligen Kunden gewünschte Funktion aktiviert wird.

Die Auswerteeinrichtung besitzt Speichermittel zur Speicherung wenigstens eines einem vorgebbaren Eichabstand entsprechenden ermittelten Abstandswerts. Hierdurch können beliebige Abstandswerte eingelernt und dem jeweils entsprechenden Eichabstand zugeordnet werden.

In vorteilhafter Weise kann diese Möglichkeit als Lernprogramm (Teaching) zur Zuordnung von schrittweise vorgebbaren Eichabständen zum jeweils dazu ermittelten Abstandswert ausgebildet werden. Insbesondere dann, wenn die Auswerteeinrichtung Mittel zur Interpolation der mit Hilfe des Lernprogramms erfassten Abstandswerte aufweist, können sehr exakte Messergebnisse erzielt werden.

Alternativ oder zusätzlich kann die Auswerteeinrichtung Vergleichsmittel zum Vergleich des jeweils ermittelten Abstandswerts mit dem wenigstens einen gespeicherten Abstandswert aufweisen, wobei dann Anzeigemittel zur Wiedergabe des dem entsprechenden gespeicherten Abstandswerts zugeordneten Zahlenwert oder zur Wiedergabe des Über-und/oder Unterschreitens eines bestimmten, als Sollwert gespeicherten Abstandswerts vorgesehen sind.

Wenigstens ein gespeicherter Abstandswert kann auch durch die Bedienanordnung schrittweise oder kontinuierlich verändert werden, um beispielsweise Änderungen ohne neue Eichvorgänge durchführen zu können.

In einer vorteilhaften Ausgestaltung sind alle Komponenten an oder in einem gemeinsamen Gehäuse angeordnet, wobei die Staudüse und deren Zuleitung auch außerhalb des Gehäuses angeordnet sein können und an dieses anschließbar sind.

Ausführungsbeispiele der Erfindung sind in der Zeichnung dargestellt und in der nachfolgenden Beschreibung näher erläutert. Es zeigen:
- Figur 1: ein erstes Ausführungsbeispiel mit einer Auswertung des Differenzsignals zwischen dem am Sauganschluss des Ejektors erfassten Druckwert und dem Versorgungsdruck,
- Figur 2: eine ähnliche Anordnung mit veränderbarem Versorgungsdruck als Vergleichsdruck,
- Figur 3: ein drittes Ausführungsbeispiel mit einer Auswertung des Quotienten zwischen Differenzdruck und Versorgungsdruck und
- Figur 4: ein Flussdiagramm zur Erläuterung der Wirkungs- weise.

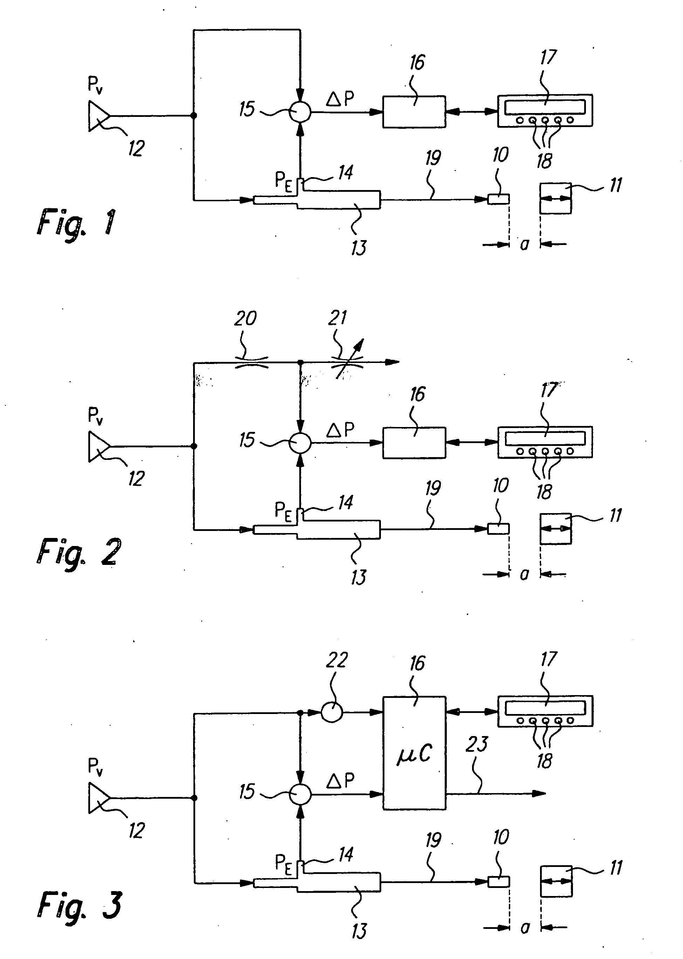

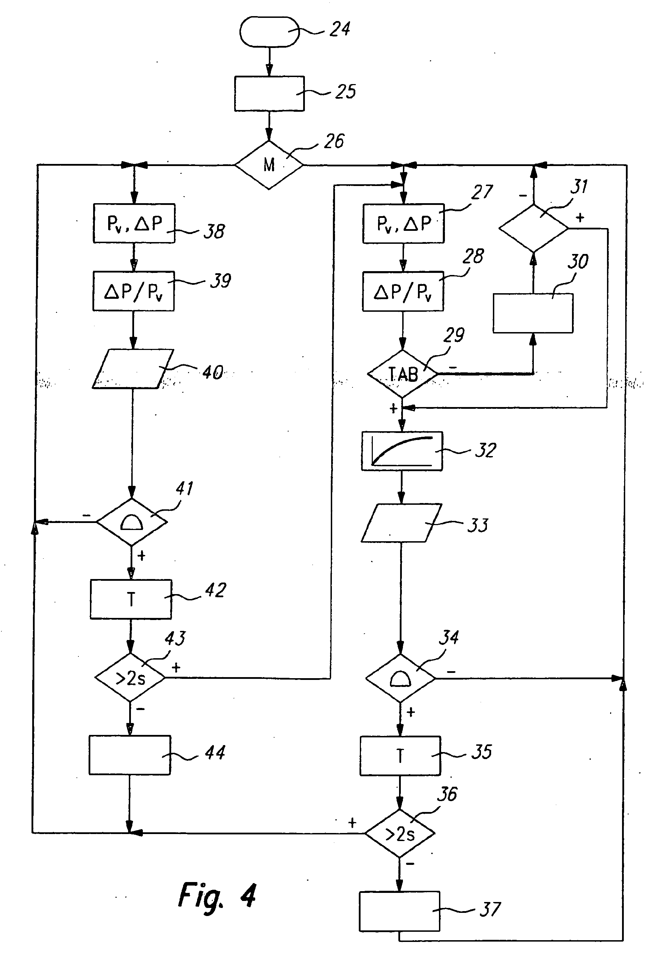

Die in Figur 1 dargestellte Abstands-Messeinrichtung dient zur Messung des Abstands a zwischen einer Staudüse 10 und einem Objekt 11. Über einen Versorgungsdruckanschluss 12 wird ein Versorgungsdruck Pv über einen Ejektor 13 der Staudüse 10 zugeführt. Ein solcher Ejektor 13 - auch als Strahlpumpe bezeichnet - ist im eingangs angegebenen Stand der Technik näher beschrieben. Er besitzt einen seitlichen Sauganschluss 14, über den Luft angesaugt wird, wenn der Ejektor 13 von Luft oder einem anderen gasförmigen Medium durchströmt wird. Dadurch entsteht am Sauganschluss 14 ein Unterdruck P_{E}. Ein Differenzdrucksensor 15 ist sowohl mit dem Versorgungsdruckanschluss 12 als auch mit dem Sauganschluss 14 verbunden und misst dadurch einen Differenzdruck ΔP, das der Differenz Pv - P_{E} entspricht. Dieser Differenzdruck ΔP wird als elektrisches Signal einer Auswerteeinrichtung 16 zugeführt und dort in einen Abstandswert a umgerechnet und bei Bedarf gespeichert, ausgedruckt oder mittels eines Displays 17 angezeigt. Dieses Display 17 ist mit Bedienelementen 18 versehen, wobei der Messvorgang in Verbindung mit Figur 4 noch näher erläutert wird.

Alle dargestellten und beschriebenen Komponenten können in beziehungsweise an einem gemeinsamen Gehäuse angeordnet sein, wobei die Staudüse 10 auch mittels eines Verbindungsschlauchs 19 oder einer sonstigen Verbindungsleitung entfernt vom Gehäuse angeordnet sein kann.

Das in Figur 2 dargestellte zweite Ausführungsbeispiel entspricht weitgehend dem ersten Ausführungsbeispiel, sodass gleiche oder gleich wirkende Bauteile mit denselben Bezugszeichen versehen und nicht nochmals beschrieben sind. Im Unterschied zum ersten Ausführungsbeispiel ist der Differenzdrucksensor 15 nicht direkt mit dem Versorgungsdruckanschluss 12 verbunden, sondern eine aus zwei Drosseln 20, 21 bestehende Reihenschaltung ist mit dem Versorgungsdruckanschluss 12 verbunden, und der Differenzdrucksensor 15 ist mit einem Abgriff zwischen den Drosseln 20, 21 verbunden. Eine Drossel 21 ist als verstellbare Drossel ausgebildet. Die aus zwei Drosseln 20, 21 bestehende Reihenschaltung dient als einstellbare Druckveränderungs- bzw. Druckabsenkungseinrichtung für den Versorgungsdruck, sodass dadurch die Messkennlinie parallel verschoben und damit an den Schaltpunkt der Sensoranordnung angepasst werden kann.

Das in Figur 3 dargestellte dritte Ausführungsbeispiel ist wiederum ähnlich aufgebaut, und gleiche oder gleich wirkende Bauteile sind mit denselben Bezugszeichen versehen und nicht nochmals beschrieben. Bei diesem Ausführungsbeispiel wird der beispielsweise einen Mikrocontroller aufweisenden Auswerteeinrichtung 16 sowohl das Differenzdrucksignal ΔP als auch ein dem Versorgungsdruck Pv entsprechendes elektrisches Signal zugeführt, zu dessen Erzeugung ein weiterer Drucksensor 22 mit dem Versorgungsdruckanschluss 12 verbunden ist. In der Auswerteeinrichtung 16 wird der Quotient ΔP/Pv gebildet und als Messsignal zur Bildung des Abstandswerts a verwendet. Dieser Quotient ist vom Versorgungsdruck unabhängig, sodass zur genauen Messung keine Konstantdruckquelle erforderlich ist, die im Zusammenhang mit den beiden ersten Ausführungsbeispielen vorgesehen werden sollte.

Anstelle eines Differenzdrucksensors 15 kann selbstverständlich auch eine andere Einrichtung zur Bildung des Differenzdrucks ΔP eingesetzt werden. Beispielsweise könnte bei allen Ausführungsbeispielen der Versorgungsdruckanschluss 12 mit dem Drucksensor 22 verbunden sein, während der Sauganschluss 14 mit einem weiteren Drucksensor verbunden sein könnte, wobei dann der Differenzdruck und gegebenenfalls auch der Druckquotient rechnerisch in der Auswerteeinrichtung 16 gebildet wird.

Die Auswerteeinrichtung 16 besitzt einen Schaltausgang 23, durch den bei Erreichen, Über- und/oder Unterschreiten eines vorgegebenen Druckwerts ein Schaltvorgang ausgelöst werden kann.

Auch beim dritten Ausführungsbeispiel kann selbstverständlich der Versorgungsdruck analog zum zweiten Ausführungsbeispiel mit Hilfe von Drosseln 20, 21 oder einer anderen Druckreduziereinrichtung zur Erzeugung eines entsprechenden Messsignals reduziert werden.

Die Wirkungsweise der anhand von drei Ausführungsbeispielen beschriebenen Abstands-Messeinrichtung wird im folgenden anhand des in Figur 4 dargestellten Flussdiagramms erläutert. Die Funktionen dieses Flussdiagramms sind in der Auswerteeinrichtung 16 enthalten, beispielsweise als Ablaufprogramm des Mikrocontrollers oder auch in schaltungsmäßiger Ausführung beispielsweise als ASIC.

Nach dem start 24 des Messvorgangs wird mittels der Bedienelemente 18 eine Ejektorwahl 25 getroffen, sofern verschiedene Ejektoren wahlweise einsetzbar sind und der jeweils eingesetzte Ejektor eingegeben werden muss.

Anschließend erfolgt eine Aufforderung im Display 17, eine von zwei möglichen Mess- beziehungsweise Auswertemodi in einem Auswahlschritt 26 durch Betätigung eines Bedienelements auszuwählen. Zunächst wird der in Figur 4 dargestellte rechte Flusszweig beschrieben, der die Wiedergabe des Zahlenwerts des jeweils vorgegebenen und erfassten Abstands zum Inhalt hat.

Zunächst werden im Leseschritt 27 die Werte Pv und ΔP eingelesen, sofern es sich um das dritte Ausführungsbeispiel handelt. Bei den ersten beiden Ausführungsbeispielen wird nur der Wert ΔP eingelesen. Im nachfolgenden Dividierschritt 28, der ebenfalls nur für das dritte Ausführungsbeispiel gilt, wird der Quotient ΔP/Pv gebildet.

Nun wird im Abfrageschritt 29 abgefragt, ob bereits eine Eichtabelle im Rahmen eines Lernprogramms aufgenommen wurde. Ist dies nicht der Fall (Minuszeichen), dann wird ein erster Stütz- beziehungsweise Eichwert im Teach-Schritt 30 aufgenommen. Dies erfolgt dadurch, dass mittels des Objekts 11 ein bestimmter Eichabstand eingestellt wird, wobei der diesem Eichabstand zugeordnete Messwert dann dem entsprechenden Zahlenwert zugeordnet und in einer Speichereinrichtung der Auswerteeinrichtung abgespeichert wird. Im nachfolgenden Abfrageschritt 31 wird dann abgefragt, ob schon die vollständige Tabelle beziehungsweise Eichkurve eingespeichert ist. Ist dies nicht der Fall, so wird die bereits beschriebene Schleife nochmals durchlaufen und dann in einem weiteren Teach-Schritt 30 der nächste Eich- beziehungsweise Stützwert eingespeichert Dieser Vorgang wiederholt sich so lange, bis alle erforderlichen oder gewünschten Eichwerte eingespeichert sind. Dann wird im Abfrageschritt 31 durch entsprechende Bedienvorgänge 18 (zum Beispiel Drücken einer Taste) eingegeben, dass die vollständige Tabelle beziehungsweise Eichkurve erfasst ist (Pluszeichen). Im dann erfolgenden Interpolationsschritt 32 werden die erfassten Werte zu einer Mess- oder Eichkurve interpoliert. Dann erfolgt in einem Wiedergabeschritt 33 die Wiedergabe des augenblicklich vorliegenden Abstands a als Zahlenwert auf dem Display 17. Selbstverständlich sind auch andere Arten der Wiedergabe alternativ oder zusätzlich möglich, zum Beispiel eine Druckerausgabe, eine Fernübertragung oder dergleichen.

Im nachfolgenden Prüfschritt 34 wird geprüft, ob ein bestimmtes Bedienelement, beispielsweise eine bestimmte Taste, betätigt ist. Ist dies nicht der Fall, so werden die zuvor beschriebenen Schritte in einer Schleife wieder durchlaufen, wobei die Einspeicherung weiterer Eichwerte entfällt. Dafür wird der jeweils vorliegende Abstandswert im Display (Wiedergabeschritt 33) angezeigt. Ergibt sich dagegen im Prüfschritt 34 die Betätigung einer Taste, so wird im Messschritt 35 die Betätigungsdauer erfasst. Im nachfolgenden Abfrageschritt 36 erfolgt bei einer Betätigungsdauer von über einer vorgebbaren Dauer, beispielsweise von mehr als 2 Sekunden, ein Übergang zur anderen Mess- beziehungsweise Auswerteart, die im linken Flussverlauf dargestellt ist. Bei einer kürzeren Dauer erfolgt im Inkrementschritt 37 eine inkrementale Erhöhung und/oder Erniedrigung wenigstens eines gespeicherten Sollwerts für einen bestimmten Abstand oder einer Messkurve oder dergleichen. Danach wird der Messzyklus wiederholt.

Der im linken Flusszweig dargestellte Mess- beziehungsweise Auswertemodus weist zu Beginn einen Leseschritt 38 und einen Dividierschritt 39 auf, die dem Leseschritt 27 und Dividierschritt 28 entsprechen. Danach erfolgt im Wiedergabeschritt 40 die Wiedergabe auf dem Display 17 oder durch Leuchtdioden oder dergleichen, ob ein zuvor eingespeicherter Abstands-Sollwert überschritten und/oder unterschritten und/oder erreicht ist. Im nachfolgenden Prüfschritt 41 wird wiederum analog zum Prüfschritt 34 geprüft, ob eine bestimmte Taste betätigt ist. Ist dies nicht der Fall, so erfolgt eine Wiederholung der Schritte 38 bis 41 in einer Schleife. Ist die Taste dagegen betätigt, so wird analog zum Messschritt 35 im Messschritt 42 die Betätigungsdauer gemessen. Ist diese größer als eine vorgebbare Zeit, beispielsweise wiederum größer als 2 Sekunden, so erfolgt durch den Abfrageschritt 43 ein Übergang beziehungsweise eine Umschaltung zum ersten Messmodus. Ist sie dagegen kürzer, so wird im Teach-Schritt 44 ein neuer Abstands-Sollwert eingespeichert, der dann im folgenden Zyklus hinsichtlich seines Über- beziehungsweise Unterschreitens oder Erreichens geprüft wird.

Die beschriebene Messfolge beziehungsweise das beschriebene Messprogramm kann selbstverständlich noch durch weitere Messmodi ergänzt werden. Im Prinzip ist in der Auswerteeinrichtung 16 das vollständige Messprogramm mit allen Messmodi enthalten. Je nach Kundenwunsch kann dann der jeweilige Modus beziehungsweise die jeweiligen Modi aktiviert werden, was einen wesentlich einfacheren Vorgang darstellt im Vergleich zur Vorgabe unterschiedlicher Programme beziehungsweise Vorgabe unterschiedlicher Messabläufe.

## Patentansprüche

1. Messeinrichtung zur Erfassung des Abstands (a) zwischen einer druckgespeisten Staudüse (10) und einem Objekt (11) mit Hilfe eines zwischen dieser Staudüse (10) und einem Versorgungsdruckanschluss (12) angeordneten Ejektors (13), wobei eine den Abstand (a) in Abhängigkeit des Differenzsignals (ΔP) eines Differenzdrucksensors (15) bestimmende Auswerteeinrichtung (16) vorgesehen ist, **dadurch gekennzeichnet, dass** der Differenzdrucksensor (15) mit dem Sauganschluss (14) des Ejektors (13) und dem Versorgungsdruckanschluss (12) verbunden ist und den entsprechenden Differenzdruck misst.

2. Messeinrichtung nach Anspruch 1, **dadurch gekennzeichnet, dass** zwischen dem Versorgungsdruckanschluss (12) und dem Differenzdrucksensor (15) eine einstellbare Druckveränderungseinrichtung vorgesehen ist.

3. Messeinrichtung nach Anspruch 2, **dadurch gekennzeichnet, dass** als Druckveränderungseinrichtung eine aus zwei Drosseln (20, 21) bestehende Reihenschaltung mit dem Versorgungsdruckanschluss (12) verbunden ist, von denen wenigstens die eine mit der Atmosphäre verbundene Drossel (21) einstellbar ist, wobei der Differenzdrucksensor (15) mit einem Abgriff zwischen den Drosseln (20, 21) verbunden ist.

4. Messeinrichtung nach einem der vorhergehenden Ansprüche, **dadurch gekennzeichnet, dass** die Auswerteeinrichtung (16) Mittel zur Berechnung des Abstands (a) als Funktion des durch den Wert des Versorgungsdrucks (Pv) oder einen davon abhängigen Wert dividierten Differenzsignals (ΔP) aufweist.

5. Messvorrichtung nach einem der vorhergehenden Ansprüche, **dadurch gekennzeichnet, dass** die Auswerteeinrichtung (16) Umschaltmittel (26, 36, 43) zur Umschaltung zwischen wenigstens zwei Auswertearten oder -modi besitzt, von denen die erste die Wiedergabe des Zahlenwerts des jeweils erfassten Abstands (a) und die zweite die Wiedergabe des Über- und/oder Unterschreitens eines vorgebbaren Abstands-Sollwerts beinhaltet.

6. Messeinrichtung nach einem der vorhergehenden Ansprüche, **dadurch gekennzeichnet, dass** die Auswerteeinrichtung (16) Speichermittel zur Speicherung wenigstens eins einem vorgebbaren Eichabstand entsprechenden ermittelten Abstandswerts besitzt.

7. Messeinrichtung nach Anspruch 6, **dadurch gekennzeichnet, dass** die Auswerteeinrichtung (16) ein Lernprogramm zur Zuordnung von schrittweise vorgebbaren Eichabständen zum jeweils dazu ermittelten Abstandswert aufweist.

8. Messeinrichtung nach Anspruch 7, **dadurch gekennzeichnet, dass** die Auswerteeinrichtung (16) Mittel zur Interpolation der mit Hilfe des Lernprogramms erfassten Abstandswerte aufweist.

9. Messeinrichtung nach einem der Ansprüche 6 bis 8, **dadurch gekennzeichnet, dass** die Auswerteeinrichtung (16) Vergleichsmittel zum Vergleich des jeweils ermittelten Abstandswerts mit dem wenigstens einen gespeicherten Abstandswert aufweist und dass Anzeigemittel (33, 40) zur Wiedergabe des dem entsprechenden gespeicherten Abstandswerts zugeordneten Zahlenwert oder zur Wiedergabe des Über- und/oder Unterschreitens eines bestimmten, als Sollwert gespeicherten Abstandswerts vorgesehen sind.

10. Messeinrichtung nach einem der Ansprüche 6 bis 9, **dadurch gekennzeichnet, dass** wenigstens ein gespeicherter Abstandswert durch die Bedienanordnung (37) schrittweise oder kontinuierlich veränderbar ist.

11. Messeinrichtung nach einem der vorhergehenden Ansprüche, **dadurch gekennzeichnet, dass** alle Komponenten, vorzugsweise mit Ausnahme der Staudüse (10) und deren Zuleitung (19), an oder in einem gemeinsamen Gehäuse angeordnet sind.

## Claims

1. Measuring device for determining the distance (a) between a pressure-fed pitot tube (10) and an object (11) with the aid of an ejector (13) located between this pitot tube (10) and a supply pressure port (12), wherein an evaluation unit (16) determining the distance (a) depending on the difference signal (ΔP) of a differential pressure sensor (15) is provided, **characterised in that** the differential pressure sensor (15) is connected to the inlet port (14) of the ejector (13) and the supply pressure port (12), and measures the relevant differential pressure.

2. Measuring device according to claim 1, **characterised in that** an adjustable pressure variation device is provided between the supply pressure port (12) and the differential pressure sensor (15).

3. Measuring device according to claim 2, **characterised in that** as pressure variation device a series connection comprised of two restrictors (20, 21) is connected to the supply pressure port (12), wherein at least the restrictor (21) connected to the atmosphere is adjustable, and wherein the differential pressure sensor (15) is connected to a tapping point between the restrictors (20,21).

4. Measuring device according to any of the preceding claims, **characterised in that** the evaluation unit (16) has means for calculating the distance (a) as a function of the difference signal (ΔP) divided by the value of the supply pressure (Pv) or a dependent value thereof.

5. Measuring device according to any of the preceding claims, **characterised in that** the evaluation unit (16) has switching means (26, 36, 43) for switching between at least two types or modes of evaluation, of which the first contains the reproduction of the numerical value of the distance (a) determined in each case, and the second the reproduction of the over- and/or under shooting of a presettable desired distance value.

6. Measuring device according to any of the preceding claims, **characterised in that** the evaluation unit (16) has memory means for storing one or more distance values determined according to a presettable calibration distance.

7. Measuring device according to claim 6, **characterised in that** the evaluation unit (16) has a learning program for the assignment of calibration distances presettable in steps to the respectively determined distance value.

8. Measuring device according to claim 7, **characterised in that** the evaluation unit (16) has means of interpolating the distance values determined with the aid of the learning program.

9. Measuring device according to any of claims 6 to 8, **characterised in that** the evaluation unit (16) has comparison means for comparing the respectively determined distance value with the stored distance value or values, and that display means (33, 40) are provided to reproduce the numerical value assigned to the relevant stored distance value or to reproduce the over-and/or under shooting of a specific distance value stored as desired value.

10. Measuring device according to any of claims 6 to 9, **characterised in that** at least one stored distance value may be varied by the control assembly (37) either continuously or in steps.

11. Measuring device according to any of the preceding claims, **characterised in that** all components, preferably with the exception of the pitot tube (10) and its feed line (19), are located on or in a common housing,

## Revendications

1. Dispositif de mesure, destiné à détecter la distance (a) entre un tube de Venturi (10) alimenté en pression et un objet (11) au moyen d'un éjecteur (13) disposé entre ledit tube de Venturi (10) et un raccord de pression d'alimentation (12), tandis qu'il est prévu un dispositif d'analyse (16) déterminant la distance (a) en fonction du signal de différence (ΔP) d'un capteur de différence de pression (15), **caractérisé en ce que** le capteur de différence de pression (15) est relié au raccord d'aspiration (14) de l'éjecteur (13) et au raccord de pression d'alimentation (12) et mesure la différence de pression correspondante.

2. Dispositif de mesure selon la revendication 1, **caractérisé en ce que**, entre le raccord de pression d'alimentation (12) et le capteur de différence de pression (15), il est prévu un dispositif réglable pour la variation de la pression.

3. Dispositif de mesure selon la revendication 2, **caractérisé en ce que** pour former le dispositif de variation de pression, un montage en série, formé par deux étranglements (20, 21), est relié au raccord de pression d'alimentation (12), parmi lesquels étranglements au moins l'étranglement (21), relié à l'atmosphère, est réglable, le capteur de différence de pression (15) étant relié à un point de branchement entre les étranglements (20, 21).

4. Dispositif de mesure selon l'une des revendications précédentes, **caractérisé en ce que** le dispositif d'analyse (16) comporte des moyens destinés à calculer la distance (a) comme fonction du signal de différence (ΔP) divisé par la valeur de la pression d'alimentation (Pv) ou par une valeur dépendante de celle-ci.

5. Dispositif de mesure selon l'une des revendications précédentes, **caractérisé en ce que** le dispositif d'analyse (16) comporte des moyens de commutation (26, 36, 43) pour commuter entre au moins deux types ou modes d'analyse, parmi lesquels le premier mode comporte la reproduction de la valeur numérique de la distance (a) détectée dans chaque cas et le deuxième mode comporte l'indication du franchissement supérieur ou inférieur d'une valeur de consigne de la distance, pouvant être prédéfinie.

6. Dispositif de mesure selon l'une des revendication précédentes, **caractérisé en ce que** le dispositif d'analyse (16) comporte des moyens de type mémoire destinés à mémoriser au moins une valeur de distance déterminée correspondant à une distance d'étalonnage pouvant être prédéfinie.

7. Dispositif de mesure selon la revendication 6, **caractérisé en ce que** le dispositif d'analyse (16) comporte un programme adaptatif destiné à associer des distances d'étalonnage pouvant être prédéfinies par étapes avec la valeur de la distance calculée leur correspondant à chaque fois.

8. Dispositif de mesure selon la revendication 7, **caractérisé en ce que** le dispositif d'analyse (16) comporte des moyens pour l'interpolation des valeurs de distance détectées au moyen du programme adaptatif.

9. Dispositif de mesure selon l'une des revendications 6 à 8, **caractérisé en ce que** le dispositif d'analyse (16) comporte des moyens de comparaison pour comparer la valeur de distance déterminée dans chaque cas avec ladite au moins une valeur de distance mémorisée, et **en ce qu'**il est prévu des moyens d'affichage (33 40) destinés à reproduire la valeur numérique associée à la valeur de distance mémorisée correspondante ou à indiquer le franchissement supérieur ou inférieur d'une valeur de distance déterminée, mémorisée en tant que valeur de consigne.

10. Dispositif de mesure selon l'une des revendications 6 à 9, **caractérisé en ce qu'**au moins une valeur de distance mémorisée peut être modifiée progressivement ou en continu par le dispositif de commande (37).

11. Dispositif de mesure selon l'une des revendications précédentes, **caractérisé en ce que** tous les composants, de préférence à l'exception du tube de Venturi (10) et de la conduite d'alimentation (19) de celui-ci, sont disposés sur ou dans un carter commun.
